# EUROPEAN PATENT APPLICATION

(11) **EP 4 687 327 A1**
(43) Date of publication of application: **04.02.2026**
(21) Application number: 25193384.2
(22) Date of filing: 01.08.2025
(51) Int. Cl.: H04L 9/40, G06N 20/20, H04L 9/32, H04L 41/16, H04W 12/06, H04W 12/08

(54) **ADVANCED PRIVACY PROTECTION MECHANISMS IN AND AUTHORIZATION MECHANISMS FOR VERTICAL FEDERATED LEARNING (VFL)**

(30) Priority: 01.08.2024 US 202463678395 P; 01.08.2024 US 202463678388 P
(71) Applicant: INTEL Corporation, Santa Clara, CA 95054 (US)
(72) Inventor: KOLEKAR, Abhijeet Ashok, Texas, 78641 (US)
(74) Representative: Viering, Jentschura & Partner mbB Patent- und Rechtsanwälte

(57) **Abstract**

A non-transitory computer-readable medium including instructions which, when executed by a processor of a network repository function, NRF, cause the processor to: receive a discovery request from a vertical federated learning, VFL, server to identify eligible VFL clients based on registered network function, NF, profiles; match the discovery request against the registered NF profiles; respond with eligible VFL client identifiers; and issue a secure token to the VFL server after verifying interoperability indicators and analytics capabilities of the VFL clients based on the registered NF profiles.

## Description

### CROSS-REFERENCE TO RELATED APPLICATIONS

The present application claims priority to US Provisional Patent Application Ser. No. 63/678,388 filed on August 1, 2024 and US Provisional Patent Application Ser. No. 63/678,395 filed on August 1, 2024.

### TECHNICAL FIELD

Various embodiments generally may relate to the field of wireless communications.

### BACKGROUND

Embodiments herein relate to addressing potential privacy breaches during the sample alignment process in Vertical Federated Learning (VFL) environments and to an authorization mechanism for the selection of VFL participants within a VFL group.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an example process flow related to privacy protection mechanisms within VFL;
FIG. 2 shows an illustrative example of a sequence diagram in accordance with various aspects described herein;
FIG. 3 shows an illustrative example of a sequence diagram in accordance with various aspects described herein;
FIG. 4 illustrates an example network in accordance with various embodiments;
FIG. 5 schematically illustrates a wireless network 500 in accordance with various embodiments;
FIG. 6 shows an example block diagram illustrating components, according to some example embodiments;
FIG. 7 shows an example network in accordance with various embodiments;
FIG. 8 illustrates an example simplified block diagram of artificial (AI)-assisted communication between a UE and a RAN, in accordance with various embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

### ADVANCED PRIVACY PROTECTION MECHANISMS IN VFL ENVIRONMENTS

Embodiments herein relate to addressing potential privacy breaches during the sample alignment process in Vertical Federated Learning (VFL) environments, where sensitive information such as user equipment (UE) identifiers (IDs) could be exposed between different VFL participants.

Embodiments may include advanced privacy protection mechanisms within VFL environments by ensuring that UE IDs are not exposed between participants, utilizing secure ID mapping and encryption protocols. Embodiments herein may significantly enhances the privacy and security of VFL processes, thereby protecting sensitive UE ID information and aligning with 3GPP standards for secure communication and data handling.

Embodiments may include one or more of the following aspects or characteristics:
- **ID Mapping:** Internal UE IDs (e.g., a subscription permanent identifier (SUPI)) are mapped to external UE IDs (e.g., a generic public subscription identifier (GPSI)) and vice versa to prevent direct exposure of UE IDs to unauthorized VFL participants.
- **Encrypted Communications:** All VFL-related requests and responses are encrypted using public keys of the Network Exposure Function (NEF) and integrity-protected with digital signatures to ensure data confidentiality and integrity.
- **Secure Sample Alignment:** The NEF handles the sample alignment requests and responses, ensuring that only overlapped sample IDs are shared among VFL participants without exposing individual UE IDs.

In accordance with these embodiments, a method for enhancing privacy in VFL may include at least or a combination of:
- Registering VFL entities with unique identifiers.
- Discovering VFL members using a network function.
- Managing sample alignment requests and responses through a VFL Coordinator.
- Encrypting and integrity-protecting all related communications.

The method and/or some other aspects described herein may further include mapping external user equipment (UE) IDs to internal UE IDs to safeguard UE identity information.

In accordance with these embodiments, a system for privacy protection in VFL, may be equipped with:
- A VFL Coordinator to handle sample alignment;
- Network functions for member discovery and data encryption;
- Mechanisms for converting UE IDs to maintain confidentiality.

The following aspects provide further details in accordance with these embodiments (i.e. the methods and the system described above).

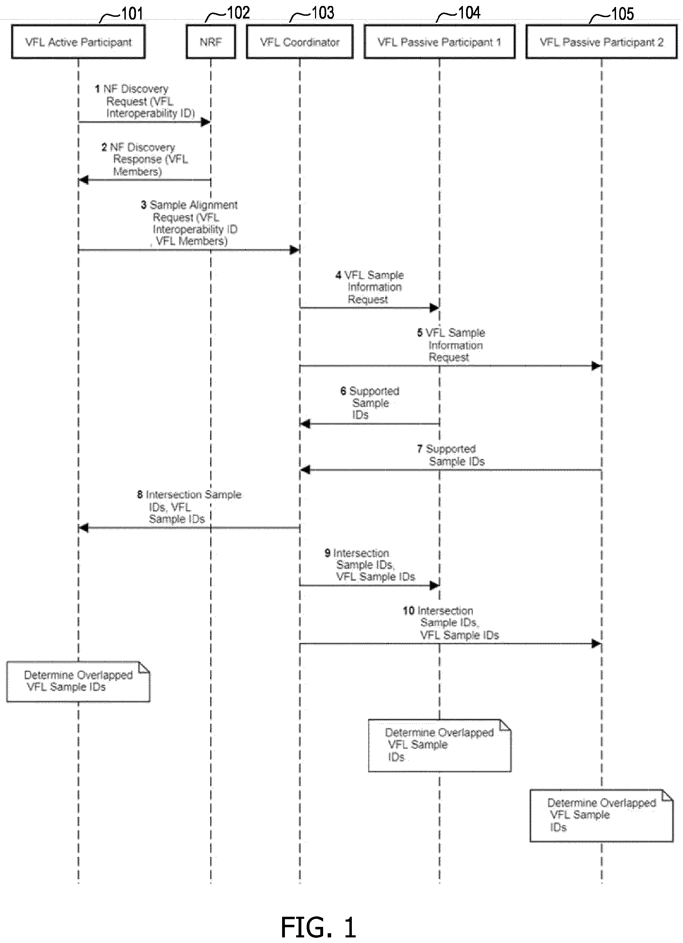

***FIG. 1*** ***shows an example process flow related to privacy protection mechanisms within VFL.***

The following describes examples of elements that may be depicted in Figure 1, above.
1. **Registration:**
   ∘ VFL entities (e.g., VFL active Participant 101, VFL passive Participant 104, 105, VFL Coordinator 103) register their supported VFL Interoperability ID(s). The VFL Interoperability ID includes a list of Vendor IDs and, if applicable, Application Name or application function (AF) Identifier(s).
2. **Discovery:**
   ∘ The VFL Active Participant 101 discovers the VFL members via the network function repository function (NRF) 102 by invoking network function (NF) discovery.
3. **Sample Alignment Request:**
   ∘ The VFL Active Participant 101 sends a sample alignment request to the VFL Coordinator 103, including the VFL Interoperability ID and VFL members.
4. **VFL Sample Information Request:**
   ∘ The VFL Coordinator 103 sends a VFL sample information request to each VFL member 104, 105 received in step 2.
5. **Return Supported Sample IDs:**
   ∘ VFL members 104, 105 return the supported sample ID(s) to the VFL Coordinator 103. If the Sample ID(s) is an external UE ID (GPSI), the NEF may map the external UE ID to the Internal UE ID (SUPI).
6. **Determine Intersection Sample IDs:**
   ∘ The VFL Coordinator 103 determines the intersection sample ID(s) of the VFL members 104, 105 and may assign VFL sample ID(s). The VFL sample ID is a new sample ID for the intersection of sample ID(s) which is the same among all VFL members.
7. **Return Intersection Sample IDs:**
   ∘ The VFL Coordinator 103 returns the intersection sample ID(s) and VFL sample ID(s) to both the VFL Active Participant 101 and VFL Passive Participants 104, 105.
8. **Determine Overlapped VFL Sample IDs:**
   ∘ All VFL members determine the overlapped VFL sample ID(s).

### AUTHORIZATON MECHANISMS FOR VFL PARTICIPANT SELECTION IN THIRD GENERATION PARTNERSHIP PROJECT (3GPP) NETWORK

Embodiments herein relate to an authorization mechanism for the selection of VFL participants within a VFL group, particularly in scenarios where VFL participants (e.g., a network data analytics function (NWDAF), an application function (AF), etc.) may operate across different domains, locations, or regions. This may involve ensuring secure and compliant communication and data sharing for training machine learning models in 3GPP networks.

In legacy implementations, the security of ML model sharing between NWDAFs was may have been viewed as part of Horizontal Federated Learning. However, the specific challenges of VFL between NWDAF and AF, especially when they are in different domains, may have not been previously addressed.

Embodiments herein relate to a robust authorization framework for VFL that integrates with existing 3GPP architectures, utilizing secure token-based mechanisms and local policies to ensure that only authorized VFL participants can engage in the federated learning process. Embodiments may enhance the security and efficiency of VFL processes in 3GPP networks, ensuring that data sharing and ML model training are conducted among verified and authorized network elements, thereby preventing unauthorized access and potential data breaches.

In accordance with these embodiments, a method for authorizing participants in a VFL environment within 3GPP networks, may include at least one or a combination of:
- a. Registering NF profiles of VFL participants, including NWDAF and AF, in an NRF;
- b. Receiving a discovery request from a VFL server to identify eligible VFL clients based on registered NF profiles;
- c. Matching the discovery request against the registered NF profiles in the NRF and responding with eligible VFL client identifiers;
- d. Issuing a secure token by the NRF to the VFL server after verifying interoperability indicators and analytics capabilities of the VFL clients;
- e. Facilitating VFL operations by transmitting the secure token from the VFL server to an NEF, which forwards the VFL operations to the identified VFL clients.

The method and/or some other aspects herein, may further include that the VFL server includes either an NWDAF or an AF, configured to initiate VFL operations within the 3GPP network.

The method and/or some other aspects herein, may further include anonymizing identifiers of the VFL clients by the NEF to protect network topology and ensure confidentiality during the discovery process.

The method and/or some other aspects herein, may further include that the VFL operations include tasks such as sample alignment, feature alignment, model training, and inference processes in a federated learning setup.

The method and/or some other aspects herein, may further include that the secure token is encrypted and integrity-protected using digital signatures, enhancing the security of the VFL authorization process.

The method and/or some other aspects herein, may further include a step of continuous monitoring and revocation of VFL participants based on compliance with predefined security policies and operational guidelines.

In accordance with these embodiments, a system for authorizing participants in a VFL environment within 3GPP networks, may include:
- a. An NRF configured to store and manage NF profiles of VFL participants;
- b. An NEF configured to process registration and discovery requests from VFL servers and clients;
- c. Secure token issuance mechanisms within the NRF for authenticating and authorizing VFL operations based on verified NF profiles and interoperability indicators.

The system and/or some other aspects herein, may further include that the secure token includes data elements such as VFL participant identifiers, analytics IDs, and interoperability indicators, ensuring that only authorized VFL participants engage in the federated learning process.

The system and/or some other aspects herein, may further include that the NEF is configured to anonymize and manage temporary identifiers for VFL clients during the discovery and operation phases to prevent unauthorized exposure of network topology and participant identities.

The following aspects provide further details in accordance with these embodiments (i.e. the methods and the system described above).

### Option 1: NWDAF as VFL Server:

1. Registration of AF (VFL Client) Data: AF registers at NEF, which updates the NEF profile with AF's details.
2. NRF Stores NEF Information: NRF stores and acknowledges the updated NEF registration.
3. NWDAF Discovery Request: NWDAF requests NRF to discover eligible AFs for VFL.NRF Query Matching and Response: NRF matches queries and responds with eligible AF IDs.
4. NWDAF Token Request and NRF Authorization: NWDAF requests a token, which NRF authorizes based on interoperability checks.
5. Token Issuance and VFL Request by NWDAF: NRF issues a token to NWDAF, which then requests VFL operations from NEF.
6. NEF Token Check and VFL Request Execution: NEF checks the token and forwards VFL requests to AFs.
7. AF Response: AFs respond to NEF after VFL operations.

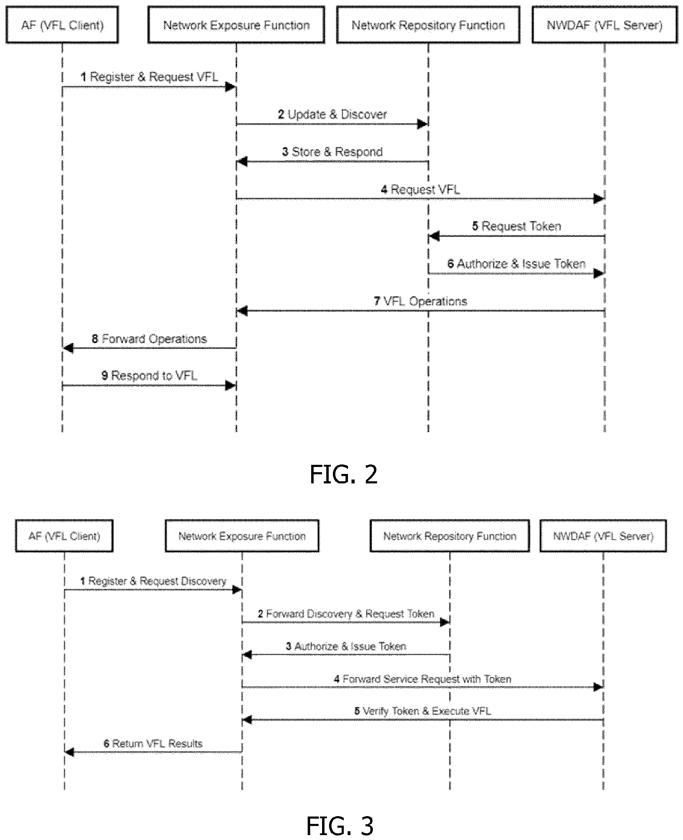

**FIG. 2** **shows an illustrative example of a sequence diagram in which NWDAF is configured as VFL Server and AF as VFL Client in accordance with various aspects described herein.**

### Option 2: AF as VFL Server:

1. Registration of NWDAF Profile: NWDAF registers its profile at NRF.
2. AF Discovery Request and NEF to NRF Discovery: AF requests discovery of NWDAFs, NEF forwards this to NRF.
3. NRF Query Matching and Response to NEF: NRF matches NWDAF profiles and responds.
4. NEF Anonymization and Discovery Response to AF: NEF anonymizes NWDAF IDs and responds to AF.
5. AF VFL Request and NEF Token Request to NRF: AF requests VFL operations, NEF requests token from NRF.
6. NRF Authorization and Token Issuance: NRF authorizes and issues token to NEF.
7. NEF VFL Request to NWDAFs and NWDAF Token Check: NEF requests VFL operations from NWDAFs, which check the token.
8. NWDAF Response: NWDAFs respond to AF after operations.

### Option 3: Authorization of VFL Participants Involving NWDAF and AF for External AF Acting as FL Server

1. External AF and NWDAF Registration: Both register their VFL capabilities and specific identifiers with NRF.
2. Discovery and Selection: External AF discovers potential NWDAF clients through NEF and NRF.
3. Token Request and Authorization: External AF requests a VFL service, NEF authorizes and requests a token from NRF, which verifies and issues the token.
4. VFL Service Execution: With the token, NEF facilitates the VFL service between External AF and NWDAF clients.

### Option 4: Authorization Mechanism through NRF and NEF for AF outside the PLMN

1. Registration of VFL Participants: Participants register their profiles including VFL capabilities and interoperability indicators.
2. Token Request and Authorization: NWDAF requests a token for VFL activities involving an external AF, which NRF authorizes based on compliance with registered profiles.
3. Service Request and Verification: NWDAF sends a service request to NEF, which verifies the token and facilitates the VFL process with the AF.

### Option 5: Authorization for Selection of Participant NWDAF Instances for 3rd Party AF-Initiated Federated Learning

1. NWDAF Registration: NWDAF registers its federated learning capabilities and partner indicators.
2. Service Request and Discovery: 3rd party AF initiates a service request, NEF facilitates discovery and token issuance through NRF.
3. Token Verification and Service Execution: NWDAF verifies the token received from NEF and participates in the federated learning task if authorized.

### Option 6: Authorization for Selection of Participant AF for NWDAF-Initiated Federated Learning

1. AF Profile Registration: AF registers its federated learning capabilities with NRF through NEF.
2. Discovery and Token Request: NWDAF initiates discovery and requests a token for involving a specific AF in the federated learning task.
3. Service Execution: Upon token verification, NEF facilitates the federated learning service between NWDAF and AF.

**FIG. 3** **shows an illustrative example of a sequence diagram in which NWDAF is configured as VFL Server and AF as VFL Client in accordance with various aspects described herein.**

### SYSTEMS AND IMPLEMENTATIONS

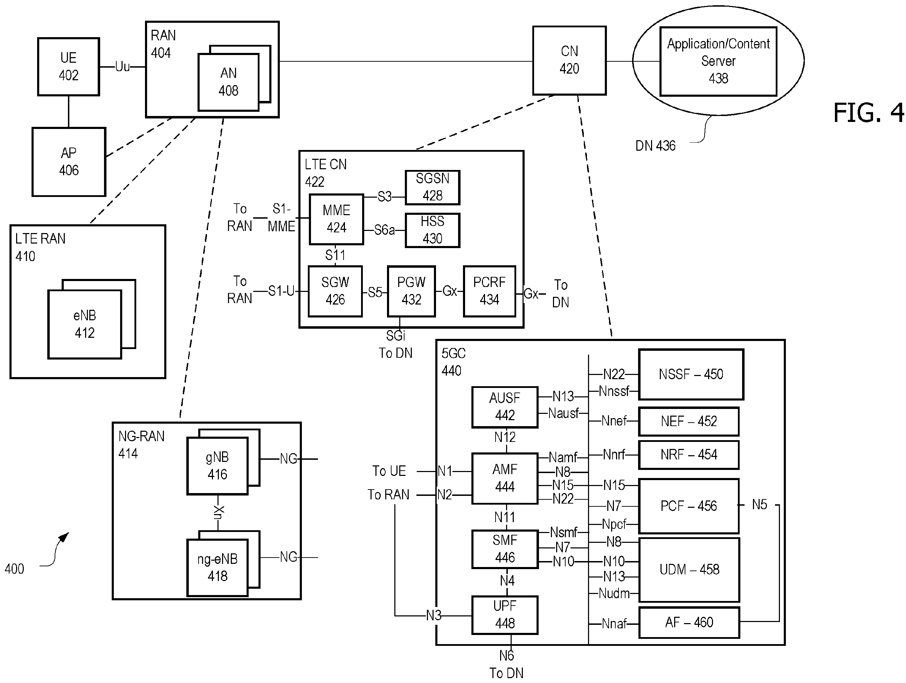

FIGs. 4-8 illustrate various systems, devices, and components that may implement aspects of disclosed embodiments.

FIG. 4 illustrates a network 400 in accordance with various embodiments. The network 400 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 400 may include a UE 402, which may include any mobile or non-mobile computing device designed to communicate with a RAN 404 via an over-the-air connection. The UE 402 may be communicatively coupled with the RAN 404 by a Uu interface. The UE 402 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 400 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 402 may additionally communicate with an AP 406 via an over-the-air connection. The AP 406 may manage a WLAN connection, which may serve to offload some/all network traffic from the RAN 404. The connection between the UE 402 and the AP 406 may be consistent with any IEEE 802.11 protocol, wherein the AP 406 could be a wireless fidelity (Wi-Fi^{®}) router. In some embodiments, the UE 402, RAN 404, and AP 406 may utilize cellular-WLAN aggregation (for example, LWA/LWIP). Cellular-WLAN aggregation may involve the UE 402 being configured by the RAN 404 to utilize both cellular radio resources and WLAN resources.

The RAN 404 may include one or more access nodes, for example, AN 408. AN 408 may terminate air-interface protocols for the UE 402 by providing access stratum protocols including RRC, PDCP, RLC, MAC, and L1 protocols. In this manner, the AN 408 may enable data/voice connectivity between CN 420 and the UE 402. In some embodiments, the AN 408 may be implemented in a discrete device or as one or more software entities running on server computers as part of, for example, a virtual network, which may be referred to as a CRAN or virtual baseband unit pool. The AN 408 be referred to as a BS, gNB, RAN node, eNB, ng-eNB, NodeB, RSU, TRxP, TRP, etc. The AN 408 may be a macrocell base station or a low power base station for providing femtocells, picocells or other like cells having smaller coverage areas, smaller user capacity, or higher bandwidth compared to macrocells.

In embodiments in which the RAN 404 includes a plurality of ANs, they may be coupled with one another via an X2 interface (if the RAN 404 is an LTE RAN) or an Xn interface (if the RAN 404 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 404 may each manage one or more cells, cell groups, component carriers, etc. to provide the UE 402 with an air interface for network access. The UE 402 may be simultaneously connected with a plurality of cells provided by the same or different ANs of the RAN 404. For example, the UE 402 and RAN 404 may use carrier aggregation to allow the UE 402 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 404 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 402 or AN 408 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 404 may be an LTE RAN 410 with eNBs, for example, eNB 412. The LTE RAN 410 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 404 may be an NG-RAN 414 with gNBs, for example, gNB 416, or ng-eNBs, for example, ng-eNB 418. The gNB 416 may connect with 5G-enabled UEs using a 5G NR interface. The gNB 416 may connect with a 5G core through an NG interface, which may include an N2 interface or an N3 interface. The ng-eNB 418 may also connect with the 5G core through an NG interface, but may connect with a UE via an LTE air interface. The gNB 416 and the ng-eNB 418 may connect with each other over an Xn interface.

In some embodiments, the NG interface may be split into two parts, an NG user plane (NG-U) interface, which carries traffic data between the nodes of the NG-RAN 414 and a UPF 448 (e.g., N3 interface), and an NG control plane (NG-C) interface, which is a signaling interface between the nodes of the NG-RAN414 and an AMF 444 (e.g., N2 interface).

The NG-RAN 414 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 402 can be configured with multiple BWPs where each BWP configuration has a different SCS. When a BWP change is indicated to the UE 402, the SCS of the transmission is changed as well. Another use case example of BWP is related to power saving. In particular, multiple BWPs can be configured for the UE 402 with different amount of frequency resources (for example, PRBs) to support data transmission under different traffic loading scenarios. A BWP containing a smaller number of PRBs can be used for data transmission with small traffic load while allowing power saving at the UE 402 and in some cases at the gNB 416. A BWP containing a larger number of PRBs can be used for scenarios with higher traffic load.

The RAN 404 is communicatively coupled to CN 420 that includes network elements to provide various functions to support data and telecommunications services to customers/subscribers (for example, users of UE 402). The components of the CN 420 may be implemented in one physical node or separate physical nodes. In some embodiments, NFV may be utilized to virtualize any or all of the functions provided by the network elements of the CN 420 onto physical compute/storage resources in servers, switches, etc. A logical instantiation of the CN 420 may be referred to as a network slice, and a logical instantiation of a portion of the CN 420 may be referred to as a network sub-slice.

In some embodiments, the CN 420 may be an LTE CN 422, which may also be referred to as an EPC. The LTE CN 422 may include MME 424, SGW 426, SGSN 428, HSS 430, PGW 432, and PCRF 434 coupled with one another over interfaces (or "reference points") as shown. Functions of the elements of the LTE CN 422 may be briefly introduced as follows.

The MME 424 may implement mobility management functions to track a current location of the UE 402 to facilitate paging, bearer activation/deactivation, handovers, gateway selection, authentication, etc.

The SGW 426 may terminate an S1 interface toward the RAN and route data packets between the RAN and the LTE CN 422. The SGW 426 may be a local mobility anchor point for inter-RAN node handovers and also may provide an anchor for inter-3GPP mobility. Other responsibilities may include lawful intercept, charging, and some policy enforcement.

The SGSN 428 may track a location of the UE 402 and perform security functions and access control. In addition, the SGSN 428 may perform inter-EPC node signaling for mobility between different RAT networks; PDN and S-GW selection as specified by MME 424; MME selection for handovers; etc. The S3 reference point between the MME 424 and the SGSN 428 may enable user and bearer information exchange for inter-3GPP access network mobility in idle/active states.

The HSS 430 may include a database for network users, including subscription-related information to support the network entities' handling of communication sessions. The HSS 430 can provide support for routing/roaming, authentication, authorization, naming/addressing resolution, location dependencies, etc. An S6a reference point between the HSS 430 and the MME 424 may enable transfer of subscription and authentication data for authenticating/authorizing user access to the LTE CN 420.

The PGW 432 may terminate an SGi interface toward a data network (DN) 436 that may include an application/content server 438. The PGW 432 may route data packets between the LTE CN 422 and the data network 436. The PGW 432 may be coupled with the SGW 426 by an S5 reference point to facilitate user plane tunneling and tunnel management. The PGW 432 may further include a node for policy enforcement and charging data collection (for example, PCEF). Additionally, the SGi reference point between the PGW 432 and the data network 436 may be an operator external public, a private PDN, or an intra-operator packet data network, for example, for provision of IMS services. The PGW 432 may be coupled with a PCRF 434 via a Gx reference point

The PCRF 434 is the policy and charging control element of the LTE CN 422. The PCRF 434 may be communicatively coupled to the app/content server 438 to determine appropriate QoS and charging parameters for service flows. The PCRF 432 may provision associated rules into a PCEF (via Gx reference point) with appropriate TFT and QCI.

In some embodiments, the CN 420 may be a 5GC 440. The 5GC 440 may include an AUSF 442, AMF 444, SMF 446, UPF 448, NSSF 450, NEF 452, NRF 454, PCF 456, UDM 458, and AF 460 coupled with one another over interfaces (or "reference points") as shown. Functions of the elements of the 5GC 440 may be briefly introduced as follows.

The AUSF 442 may store data for authentication of UE 402 and handle authentication-related functionality. The AUSF 442 may facilitate a common authentication framework for various access types. In addition to communicating with other elements of the 5GC 440 over reference points as shown, the AUSF 442 may exhibit an Nausf service-based interface.

The AMF 444 may allow other functions of the 5GC 440 to communicate with the UE 402 and the RAN 404 and to subscribe to notifications about mobility events with respect to the UE 402. The AMF 444 may be responsible for registration management (for example, for registering UE 402), connection management, reachability management, mobility management, lawful interception of AMF-related events, and access authentication and authorization. The AMF 444 may provide transport for SM messages between the UE 402 and the SMF 446, and act as a transparent proxy for routing SM messages. AMF 444 may also provide transport for SMS messages between UE 402 and an SMSF. AMF 444 may interact with the AUSF 442 and the UE 402 to perform various security anchor and context management functions. Furthermore, AMF 444 may be a termination point of a RAN CP interface, which may include or be an N2 reference point between the RAN 404 and the AMF 444; and the AMF 444 may be a termination point of NAS (N1) signaling, and perform NAS ciphering and integrity protection. AMF 444 may also support NAS signaling with the UE 402 over an N3 IWF interface.

The SMF 446 may be responsible for SM (for example, session establishment, tunnel management between UPF 448 and AN 408); UE IP address allocation and management (including optional authorization); selection and control of UP function; configuring traffic steering at UPF 448 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 444 over N2 to AN 408; and determining SSC mode of a session. SM may refer to management of a PDU session, and a PDU session or "session" may refer to a PDU connectivity service that provides or enables the exchange of PDUs between the UE 402 and the data network 436.

The UPF 448 may act as an anchor point for intra-RAT and inter-RAT mobility, an external PDU session point of interconnect to data network 436, and a branching point to support multi-homed PDU session. The UPF 448 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 448 may include an uplink classifier to support routing traffic flows to a data network.

The NSSF 450 may select a set of network slice instances serving the UE 402. The NSSF 450 may also determine allowed NSSAI and the mapping to the subscribed S-NSSAIs, if needed. The NSSF 450 may also determine the AMF set to be used to serve the UE 402, or a list of candidate AMFs based on a suitable configuration and possibly by querying the NRF 454. The selection of a set of network slice instances for the UE 402 may be triggered by the AMF 444 with which the UE 402 is registered by interacting with the NSSF 450, which may lead to a change of AMF. The NSSF 450 may interact with the AMF 444 via an N22 reference point; and may communicate with another NSSF in a visited network via an N31 reference point (not shown). Additionally, the NSSF 450 may exhibit an Nnssf service-based interface.

The NEF 452 may securely expose services and capabilities provided by 3GPP network functions for third party, internal exposure/re-exposure, AFs (e.g., AF 460), edge computing or fog computing systems, etc. In such embodiments, the NEF 452 may authenticate, authorize, or throttle the AFs. NEF 452 may also translate information exchanged with the AF 460 and information exchanged with internal network functions. For example, the NEF 452 may translate between an AF-Service-Identifier and an internal 5GC information. NEF 452 may also receive information from other NFs based on exposed capabilities of other NFs. This information may be stored at the NEF 452 as structured data, or at a data storage NF using standardized interfaces. The stored information can then be re-exposed by the NEF 452 to other NFs andAFs, or used for other purposes such as analytics. Additionally, the NEF 452 may exhibit an Nnef service-based interface.

The NRF 454 may support service discovery functions, receive NF discovery requests from NF instances, and provide the information of the discovered NF instances to the NF instances. NRF 454 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 454 may exhibit the Nnrf service-based interface.

The PCF 456 may provide policy rules to control plane functions to enforce them, and may also support unified policy framework to govern network behavior. The PCF 456 may also implement a front end to access subscription information relevant for policy decisions in a UDR of the UDM 458. In addition to communicating with functions over reference points as shown, the PCF 456 exhibit an Npcf service-based interface.

The UDM 458 may handle subscription-related information to support the network entities' handling of communication sessions, and may store subscription data of UE 402. For example, subscription data may be communicated via an N8 reference point between the UDM 458 and the AMF 444. The UDM 458 may include two parts, an application front end and a UDR. The UDR may store subscription data and policy data for the UDM 458 and the PCF 456, and/or structured data for exposure and application data (including PFDs for application detection, application request information for multiple UEs 402) for the NEF 452. The Nudr service-based interface may be exhibited by the UDR 221 to allow the UDM 458, PCF 456, and NEF 452 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 458 may exhibit the Nudm service-based interface.

The AF 460 may provide application influence on traffic routing, provide access to NEF, and interact with the policy framework for policy control.

In some embodiments, the 5GC 440 may enable edge computing by selecting operator/3^{rd} party services to be geographically close to a point that the UE 402 is attached to the network. This may reduce latency and load on the network. To provide edge-computing implementations, the 5GC 440 may select a UPF 448 close to the UE 402 and execute traffic steering from the UPF 448 to data network 436 via the N6 interface. This may be based on the UE subscription data, UE location, and information provided by the AF 460. In this way, the AF 460 may influence UPF (re)selection and traffic routing. Based on operator deployment, when AF 460 is considered to be a trusted entity, the network operator may permit AF 460 to interact directly with relevant NFs. Additionally, the AF 460 may exhibit an Naf service-based interface.

The data network 436 may represent various network operator services, Internet access, or third party services that may be provided by one or more servers including, for example, application/content server 438.

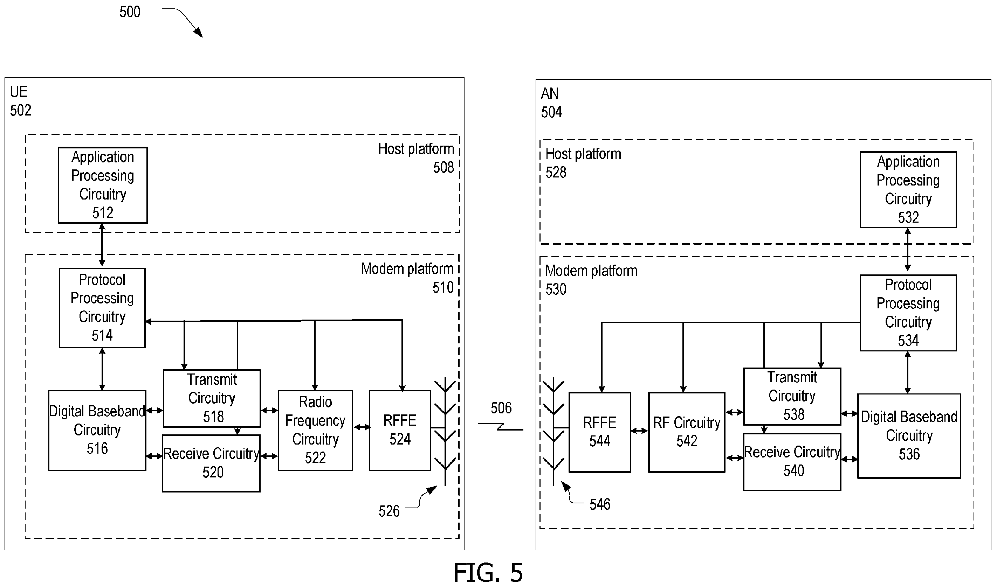

Figure 5 schematically illustrates a wireless network 500 in accordance with various embodiments. The wireless network 500 may include a UE 502 in wireless communication with an AN 504. The UE 502 and AN 504 may be similar to, and substantially interchangeable with, like-named components described elsewhere herein.

The UE 502 may be communicatively coupled with the AN 504 via connection 506. The connection 506 is illustrated as an air interface to enable communicative coupling, and can be consistent with cellular communications protocols such as an LTE protocol or a 5G NR protocol operating at mmWave or sub-6GHz frequencies.

The UE 502 may include a host platform 508 coupled with a modem platform 510. The host platform 508 may include application processing circuitry 512, which may be coupled with protocol processing circuitry 514 of the modem platform 510. The application processing circuitry 512 may run various applications for the UE 502 that source/sink application data. The application processing circuitry 512 may further implement one or more layer operations to transmit/receive application data to/from a data network. These layer operations may include transport (for example UDP) and Internet (for example, IP) operations

The protocol processing circuitry 514 may implement one or more of layer operations to facilitate transmission or reception of data over the connection 506. The layer operations implemented by the protocol processing circuitry 514 may include, for example, MAC, RLC, PDCP, RRC and NAS operations.

The modem platform 510 may further include digital baseband circuitry 516 that may implement one or more layer operations that are "below" layer operations performed by the protocol processing circuitry 514 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 510 may further include transmit circuitry 518, receive circuitry 520, RF circuitry 522, and RF front end (RFFE) 524, which may include or connect to one or more antenna panels 526. Briefly, the transmit circuitry 518 may include a digital-to-analog converter, mixer, intermediate frequency (IF) components, etc.; the receive circuitry 520 may include an analog-to-digital converter, mixer, IF components, etc.; the RF circuitry 522 may include a low-noise amplifier, a power amplifier, power tracking components, etc.; RFFE 524 may include filters (for example, surface/bulk acoustic wave filters), switches, antenna tuners, beamforming components (for example, phase-array antenna components), etc. The selection and arrangement of the components of the transmit circuitry 518, receive circuitry 520, RF circuitry 522, RFFE 524, and antenna panels 526 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 514 may include one or more instances of control circuitry (not shown) to provide control functions for the transmit/receive components.

A UE reception may be established by and via the antenna panels 526, RFFE 524, RF circuitry 522, receive circuitry 520, digital baseband circuitry 516, and protocol processing circuitry 514. In some embodiments, the antenna panels 526 may receive a transmission from the AN 504 by receive-beamforming signals received by a plurality of antennas/antenna elements of the one or more antenna panels 526.

A UE transmission may be established by and via the protocol processing circuitry 514, digital baseband circuitry 516, transmit circuitry 518, RF circuitry 522, RFFE 524, and antenna panels 526. In some embodiments, the transmit components of the UE 504 may apply a spatial filter to the data to be transmitted to form a transmit beam emitted by the antenna elements of the antenna panels 526.

Similar to the UE 502, the AN 504 may include a host platform 528 coupled with a modem platform 530. The host platform 528 may include application processing circuitry 532 coupled with protocol processing circuitry 534 of the modem platform 530. The modem platform may further include digital baseband circuitry 536, transmit circuitry 538, receive circuitry 540, RF circuitry 542, RFFE circuitry 544, and antenna panels 546. The components of the AN 504 may be similar to and substantially interchangeable with like-named components of the UE 502. In addition to performing data transmission/reception as described above, the components of the AN 508 may perform various logical functions that include, for example, RNC functions such as radio bearer management, uplink and downlink dynamic radio resource management, and data packet scheduling.

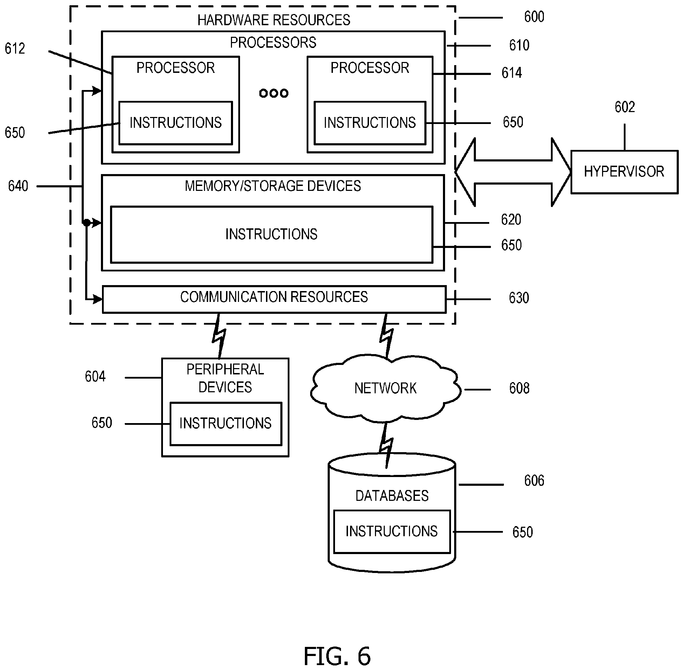

Figure 6 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 6 shows a diagrammatic representation of hardware resources 600 including one or more processors (or processor cores) 610, one or more memory/storage devices 620, and one or more communication resources 630, each of which may be communicatively coupled via a bus 640 or other interface circuitry. For embodiments where node virtualization (e.g., NFV) is utilized, a hypervisor 602 may be executed to provide an execution environment for one or more network slices/sub-slices to utilize the hardware resources 600.

The processors 610 may include, for example, a processor 612 and a processor 614. The processors 610 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 620 may include main memory, disk storage, or any suitable combination thereof. The memory/storage devices 620 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 630 may include interconnection or network interface controllers, components, or other suitable devices to communicate with one or more peripheral devices 604 or one or more databases 606 or other network elements via a network 608. For example, the communication resources 630 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 650 may comprise software, a program, an application, an applet, an app, or other executable code for causing at least any of the processors 610 to perform any one or more of the methodologies discussed herein. The instructions 650 may reside, completely or partially, within at least one of the processors 610 (e.g., within the processor's cache memory), the memory/storage devices 620, or any suitable combination thereof. Furthermore, any portion of the instructions 650 may be transferred to the hardware resources 600 from any combination of the peripheral devices 604 or the databases 606. Accordingly, the memory of processors 610, the memory/storage devices 620, the peripheral devices 604, and the databases 606 are examples of computer-readable and machine-readable media.

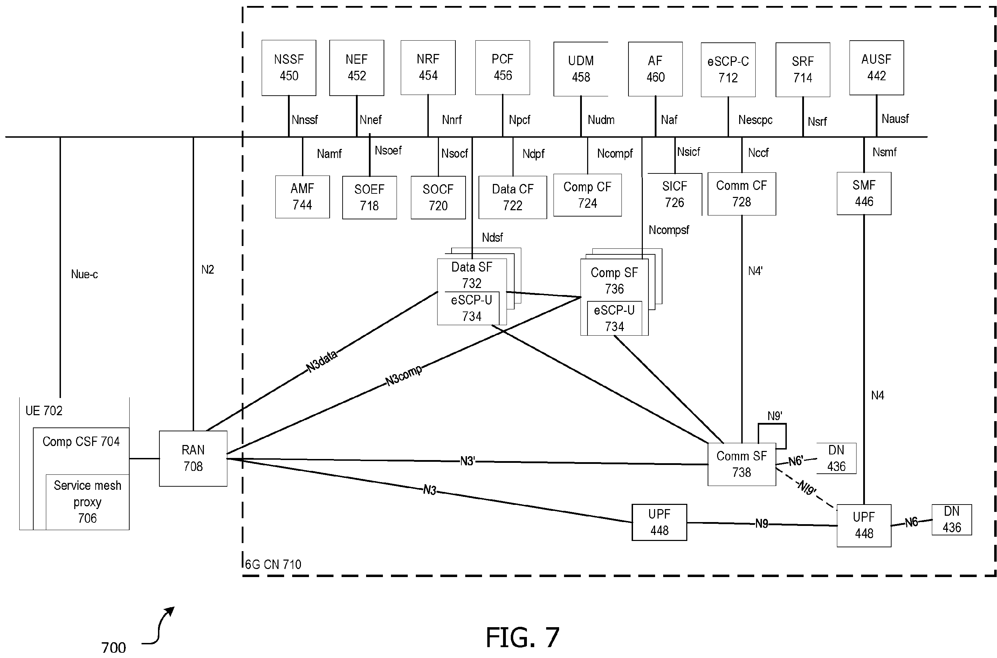

Figure 7 illustrates a network 700 in accordance with various embodiments. The network 700 may operate in a matter consistent with 3GPP technical specifications or technical reports for 6G systems. In some embodiments, the network 700 may operate concurrently with network 400. For example, in some embodiments, the network 700 may share one or more frequency or bandwidth resources with network 400. As one specific example, a UE (e.g., UE 702) may be configured to operate in both network 700 and network 400. Such configuration may be based on a UE including circuitry configured for communication with frequency and bandwidth resources of both networks 400 and 700. In general, several elements of network 700 may share one or more characteristics with elements of network 400. For the sake of brevity and clarity, such elements may not be repeated in the description of network 700.

The network 700 may include a UE 702, which may include any mobile or non-mobile computing device designed to communicate with a RAN 708 via an over-the-air connection. The UE 702 may be similar to, for example, UE 402. The UE 702 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in Figure 7, in some embodiments the network 700 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in Figure 7, the UE 702 may be communicatively coupled with an AP such as AP 406 as described with respect to Figure 4. Additionally, although not specifically shown in Figure 7, in some embodiments the RAN 708 may include one or more ANss such as AN 408 as described with respect to Figure 4. The RAN 708 and/or the AN of the RAN 708 may be referred to as a base station (BS), a RAN node, or using some other term or name.

The UE 702 and the RAN 708 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 708 may allow for communication between the UE 702 and a 6G core network (CN) 710. Specifically, the RAN 708 may facilitate the transmission and reception of data between the UE 702 and the 6G CN 710. The 6G CN 710 may include various functions such as NSSF 450, NEF 452, NRF 454, PCF 456, UDM 458, AF 460, SMF 446, and AUSF 442. The 6G CN 710 may additional include UPF 448 and DN 436 as shown in Figure 7.

Additionally, the RAN 708 may include various additional functions that are in addition to, or alternative to, functions of a legacy cellular network such as a 4G or 5G network. Two such functions may include a Compute Control Function (Comp CF) 724 and a Compute Service Function (Comp SF) 736. The Comp CF 724 and the Comp SF 736 may be parts or functions of the Computing Service Plane. Comp CF 724 may be a control plane function that provides functionalities such as management of the Comp SF 736, computing task context generation and management (e.g., create, read, modify, delete), interaction with the underlying computing infrastructure for computing resource management, etc.. Comp SF 736 may be a user plane function that serves as the gateway to interface computing service users (such as UE 702) and computing nodes behind a Comp SF instance. Some functionalities of the Comp SF 736 may include: parse computing service data received from users to compute tasks executable by computing nodes; hold service mesh ingress gateway or service API gateway; service and charging policies enforcement; performance monitoring and telemetry collection, etc. In some embodiments, a Comp SF 736 instance may serve as the user plane gateway for a cluster of computing nodes. A Comp CF 724 instance may control one or more Comp SF 736 instances.

Two other such functions may include a Communication Control Function (Comm CF) 728 and a Communication Service Function (Comm SF) 738, which may be parts of the Communication Service Plane. The Comm CF 728 may be the control plane function for managing the Comm SF 738, communication sessions creation/configuration/releasing, and managing communication session context. The Comm SF 738 may be a user plane function for data transport Comm CF 728 and Comm SF 738 may be considered as upgrades of SMF 446 and UPF 448, which were described with respect to a 5G system in Figure 4. The upgrades provided by the Comm CF 728 and the Comm SF 738 may enable service-aware transport. For legacy (e.g., 4G or 5G) data transport, SMF 446 and UPF 448 may still be used.

Two other such functions may include a Data Control Function (Data CF) 722 and Data Service Function (Data SF) 732 may be parts of the Data Service Plane. Data CF 722 may be a control plane function and provides functionalities such as Data SF 732 management, Data service creation/configuration/releasing, Data service context management, etc. Data SF 732 may be a user plane function and serve as the gateway between data service users (such as UE 702 and the various functions of the 6G CN 710) and data service endpoints behind the gateway. Specific functionalities may include include: parse data service user data and forward to corresponding data service endpoints, generate charging data, report data service status.

Another such function may be the Service Orchestration and Chaining Function (SOCF) 720, which may discover, orchestrate and chain up communication/computing/data services provided by functions in the network. Upon receiving service requests from users, SOCF 720 may interact with one or more of Comp CF 724, Comm CF 728, and Data CF 722 to identify Comp SF 736, Comm SF 738, and Data SF 732 instances, configure service resources, and generate the service chain, which could contain multiple Comp SF 736, Comm SF 738, and Data SF 732 instances and their associated computing endpoints. Workload processing and data movement may then be conducted within the generated service chain. The SOCF 720 may also responsible for maintaining, updating, and releasing a created service chain.

Another such function may be the service registration function (SRF) 714, which may act as a registry for system services provided in the user plane such as services provided by service endpoints behind Comp SF 736 and Data SF 732 gateways and services provided by the UE 702. The SRF 714 may be considered a counterpart of NRF 454, which may act as the registry for network functions.

Other such functions may include an evolved service communication proxy (eSCP) and service infrastructure control function (SICF) 726, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 712 and eSCP-U 734, for control plane service communication proxy and user plane service communication proxy, respectively. The SICF 726 may control and configure eCSP instances in terms of service traffic routing policies, access rules, load balancing configurations, performance monitoring, etc.

Another such function is the AMF 744. The AMF 744 may be similar to 444, but with additional functionality. Specifically, the AMF 744 may include potential functional repartition, such as move the message forwarding functionality from the AMF 744 to the RAN 708.

Another such function is the service orchestration exposure function (SOEF) 718. The SOEF may be configured to expose service orchestration and chaining services to external users such as applications.

The UE 702 may include an additional function that is referred to as a computing client service function (comp CSF) 704. The comp CSF 704 may have both the control plane functionalities and user plane functionalities, and may interact with corresponding network side functions such as SOCF 720, Comp CF 724, Comp SF 736, Data CF 722, and/or Data SF 732 for service discovery, request/response, compute task workload exchange, etc. The Comp CSF 704 may also work with network side functions to decide on whether a computing task should be run on the UE 702, the RAN 708, and/or an element of the 6G CN 710.

The UE 702 and/or the Comp CSF 704 may include a service mesh proxy 706. The service mesh proxy 706 may act as a proxy for service-to-service communication in the user plane. Capabilities of the service mesh proxy 706 may include one or more of addressing, security, load balancing, etc.

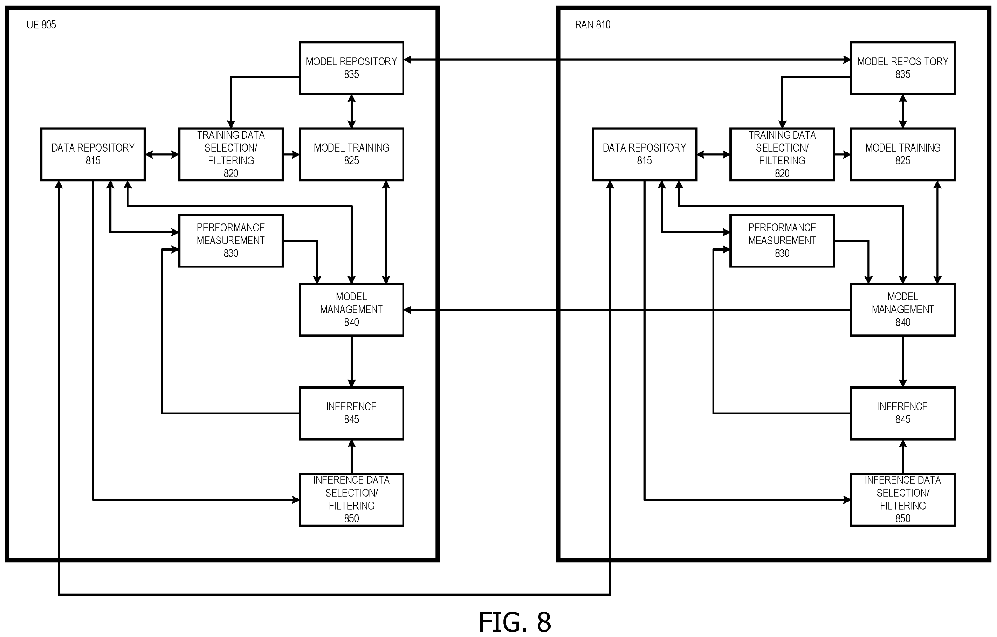

Figure 8 illustrates a simplified block diagram of artificial (AI)-assisted communication between a UE 805 and a RAN 810, in accordance with various embodiments. More specifically, as described in further detail below, AI/machine learning (ML) models may be used or leveraged to facilitate over-the-air communication between UE 805 and RAN 810.

One or both of the UE 805 and the RAN 810 may operate in a matter consistent with 3GPP technical specifications or technical reports for 6G systems. In some embodiments, the wireless cellular communication between the UE 805 and the RAN 810 may be part of, or operate concurrently with, networks 700, 400, and/or some other network described herein.

The UE 805 may be similar to, and share one or more features with, UE 702, UE 402, and/or some other UE described herein. The UE 805 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc. The RAN 810 may be similar to, and share one or more features with, RAN 414, RAN 708, and/or some other RAN described herein.

As may be seen in Figure 8, the AI-related elements of UE 805 may be similar to the AI-related elements of RAN 810. For the sake of discussion herein, description of the various elements will be provided from the point of view of the UE 805, however it will be understood that such discussion or description will apply to equally named/numbered elements of RAN 810, unless explicitly stated otherwise.

As previously noted, the UE 805 may include various elements or functions that are related to AI/ML. Such elements may be implemented as hardware, software, firmware, and/or some combination thereof. In embodiments, one or more of the elements may be implemented as part of the same hardware (e.g., chip or multi-processor chip), software (e.g., a computing program), or firmware as another element.

One such element may be a data repository 815. The data repository 815 may be responsible for data collection and storage. Specifically, the data repository 815 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 815. For example, as may be seen, the inference data selection/filter element 850 may retrieve data from the data repository 815. In various embodiments, the UE 805 may be configured to discover and request data from the data repository 810 in the RAN, and vice versa. More generally, the data repository 815 of the UE 805 may be communicatively coupled with the data repository 815 of the RAN 810 such that the respective data repositories of the UE and the RAN may share collected data with one another.

Another such element may be a training data selection/filtering functional block 820. The training data selection/filter functional block 820 may be configured to generate training, validation, and testing datasets for model training. Training data may be extracted from the data repository 815. Data may be selected/filtered based on the specific AI/ML model to be trained. Data may optionally be transformed/augmented/pre-processed (e.g., normalized) before being loaded into datasets. The training data selection/filter functional block 820 may label data in datasets for supervised learning. The produced datasets may then be fed into model training the model training functional block 825.

As noted above, another such element may be the model training functional block 825. This functional block may be responsible for training and updating(re-training) AI/ML models. The selected model may be trained using the fed-in datasets (including training, validation, testing) from the training data selection/filtering functional block. The model training functional block 825 may produce trained and tested AI/ML models which are ready for deployment. The produced trained and tested models can be stored in a model repository 835.

The model repository 835 may be responsible for AI/ML models' (both trained and untrained) storage and exposure. Trained/updated model(s) may be stored into the model repository 835. Model and model parameters may be discovered and requested by other functional blocks (e.g., the training data selection/filter functional block 820 and/or the model training functional block 825). In some embodiments, the UE 805 may discover and request AI/ML models from the model repository 835 of the RAN 810. Similarly, the RAN 810 may be able to discover and/or request AI/ML models from the model repository 835 of the UE 805. In some embodiments, the RAN 810 may configure models and/or model parameters in the model repository 835 of the UE 805.

Another such element may be a model management functional block 840. The model management functional block 840 may be responsible for management of the AI/ML model produced by the model training functional block 825. Such management functions may include deployment of a trained model, monitoring model performance, etc. In model deployment, the model management functional block 840 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 840 may decide to terminate the running model, start model re-training, select another model, etc. In embodiments, the model management functional block 840 of the RAN 810 may be able to configure model management policies in the UE 805 as shown.

Another such element may be an inference data selection/filtering functional block 850. The inference data selection/filter functional block 850 may be responsible for generating datasets for model inference at the inference functional block 845, as described below. Specifically, inference data may be extracted from the data repository 815. The inference data selection/filter functional block 850 may select and/or filter the data based on the deployed AI/ML model. Data may be transformed/augmented/pre-processed following the same transformation/augmentation/preprocessing as those in training data selection/filtering as described with respect to functional block 820. The produced inference dataset may be fed into the inference functional block 845.

Another such element may be the inference functional block 845. The inference functional block 845 may be responsible for executing inference as described above. Specifically, the inference functional block 845 may consume the inference dataset provided by the inference data selection/filtering functional block 850, and generate one or more outcomes. Such outcomes may be or include data analytics, actions, policies, etc. The outcome(s) may be provided to the performance measurement functional block 830.

The performance measurement functional block 830 may be configured to measure model performance metrics (e.g., accuracy, model bias, run-time latency, etc.) of deployed and executing models based on the inference outcome(s) for monitoring purpose. Model performance data may be stored in the data repository 815.

### EXAMPLE PROCEDURES

In some embodiments, the electronic device(s), network(s), system(s), chip(s) or component(s), or portions or implementations thereof, of Figures 4-8, or some other figure herein, may be configured to perform one or more processes, techniques, or methods as described herein, or portions thereof.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include the method for enhancing privacy in Vertical Federated Learning (VFL), including:
- Registering VFL entities with unique identifiers.
- Discovering VFL members using a network function.
- Managing sample alignment requests and responses through a VFL Coordinator.
- Encrypting and integrity-protecting all related communications.

Example 2 may include the method of example 1 and/or some other example herein, wherein further includes mapping external user equipment (UE) IDs to internal UE IDs to safeguard UE identity information.

Example 3 may include the system for privacy protection in VFL, equipped with:
- A VFL Coordinator to handle sample alignment;
- Network functions for member discovery and data encryption;
- Mechanisms for converting UE IDs to maintain confidentiality.

Example 4 may include a method for authorizing participants in a Vertical Federated Learning (VFL) environment within 3GPP networks, the method including:
- a. Registering network function (NF) profiles of VFL participants, including Network Data Analytics Function (NWDAF) and Application Function (AF), in a Network Repository Function (NRF);
- b. Receiving a discovery request from a VFL server to identify eligible VFL clients based on registered NF profiles;
- c. Matching the discovery request against the registered NF profiles in the NRF and responding with eligible VFL client identifiers;
- d. Issuing a secure token by the NRF to the VFL server after verifying interoperability indicators and analytics capabilities of the VFL clients;
- e. Facilitating VFL operations by transmitting the secure token from the VFL server to a Network Exposure Function (NEF), which forwards the VFL operations to the identified VFL clients.

Example 5 may include the method of example 4 and/or some other example herein, wherein the VFL server comprises either an NWDAF or an AF, configured to initiate VFL operations within the 3GPP network.

Example 6 may include the method of example 4 and/or some other example herein, wherein further comprising:
- a. Anonymizing identifiers of the VFL clients by the NEF to protect network topology and ensure confidentiality during the discovery process.

Example 7 may include the system for authorizing participants in a Vertical Federated Learning (VFL) environment within 3GPP networks, comprising:
- a. A Network Repository Function (NRF) configured to store and manage NF profiles of VFL participants;
- b. A Network Exposure Function (NEF) configured to process registration and discovery requests from VFL servers and clients;
- c. Secure token issuance mechanisms within the NRF for authenticating and authorizing VFL operations based on verified NF profiles and interoperability indicators.

Example 8 may include the system of example 7 and/or some other example herein, wherein the secure token includes data elements such as VFL participant identifiers, analytics IDs, and interoperability indicators, ensuring that only authorized VFL participants engage in the federated learning process.

Example 9 may include the method of example 4 and/or some other example herein, wherein the VFL operations include tasks such as sample alignment, feature alignment, model training, and inference processes in a federated learning setup.

Example 10 may include the method of example 4 and/or some other example herein, wherein the secure token is encrypted and integrity-protected using digital signatures, enhancing the security of the VFL authorization process.

Example 11 may include the method of example 4 and/or some other example herein, further comprising the step of continuous monitoring and revocation of VFL participants based on compliance with predefined security policies and operational guidelines.

Example 12 may include the system of example 7 and/or some other example herein, wherein the NEF is configured to anonymize and manage temporary identifiers for VFL clients during the discovery and operation phases to prevent unauthorized exposure of network topology and participant identities.

Example Z01 may include an apparatus comprising means to perform one or more elements of a method described in or related to any of examples 1-12, and/or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-12, and/or any other method or process described herein.

Example Z03 may include an apparatus comprising logic, modules, or circuitry to perform one or more elements of a method described in or related to any of examples 1-12, and/or any other method or process described herein.

Example Z04 may include a method, technique, or process as described in or related to any of examples 1-12, and/or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-12, and/or portions thereof.

Example Z06 may include a signal as described in or related to any of examples 1-12, or portions or parts thereof.

Example Z07 may include a datagram, packet, frame, segment, protocol data unit (PDU), or message as described in or related to any of examples 1-12, and/or portions or parts thereof, or otherwise described in the present disclosure.

Example Z08 may include a signal encoded with data as described in or related to any of examples 1-12, and/or portions or parts thereof, or otherwise described in the present disclosure.

Example Z09 may include a signal encoded with a datagram, packet, frame, segment, protocol data unit (PDU), or message as described in or related to any of examples 1-12, and/or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-12, and/or portions thereof.

Example Z11 may include a computer program comprising instructions, wherein execution of the program by a processing element is to cause the processing element to carry out the method, techniques, or process as described in or related to any of examples 1-12, and/or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

'3GPP' may refer to 'Third Generation Partnership Project'. '4G' may refer to 'Fourth Generation'. '5G' may refer to 'Fifth Generation'. '5GC' may refer to '5G Core network'. 'AC ' may refer to 'Application Client'. 'ACR' may refer to 'Application Context Relocation'. 'ACK' may refer to 'Acknowledgement'. 'ACID ' may refer to 'Application Client Identification'. 'ADRF' may refer to 'Analytics Data Repository Function'. 'AF' may refer to 'Application Function'. 'AM' may refer to 'Acknowledged Mode'. 'AMBR' may refer to 'Aggregate Maximum Bit Rate'. 'AMF' may refer to 'Access and Mobility Management Function'. 'AN' may refer to 'Access Network'. 'AnLF' may refer to 'Analytics Logical Function'. 'ANR' may refer to 'Automatic Neighbour Relation'. 'AOA ' may refer to 'Angle of Arrival'. 'AP' may refer to 'Application Protocol, Antenna Port, Access Point'. 'API' may refer to 'Application Programming Interface'. 'APN' may refer to 'Access Point Name'. 'ARP' may refer to 'Allocation and Retention Priority'. 'ARQ' may refer to 'Automatic Repeat Request'. 'AS' may refer to 'Access Stratum'. 'ASP' may refer to 'Application Service Provider'. 'ASN.1' may refer to 'Abstract Syntax Notation One'. 'AUSF' may refer to 'Authentication Server Function'. 'AWGN' may refer to 'Additive White Gaussian Noise'. 'BAP' may refer to 'Backhaul Adaptation Protocol'. 'BCH' may refer to 'Broadcast Channel'. 'BER' may refer to 'Bit Error Ratio'. 'BFD' may refer to 'Beam Failure Detection'. 'BLER' may refer to 'Block Error Rate'. 'BPSK' may refer to 'Binary Phase Shift Keying'. 'BRAS' may refer to 'Broadband Remote Access Server'. 'BSS' may refer to 'Business Support System'. 'BS' may refer to 'Base Station'. 'BSR' may refer to 'Buffer Status Report'. 'BW' may refer to 'Bandwidth'. 'BWP' may refer to 'Bandwidth Part'.

'C-RNTI' may refer to 'Cell Radio Network Temporary Identity'. 'CA' may refer to 'Carrier Aggregation, Certification Authority'. 'CAPEX' may refer to 'CAPital Expenditure'. 'CBD' may refer to 'Candidate Beam Detection'. 'CBRA' may refer to 'Contention Based Random Access'. 'CC' may refer to 'Component Carrier, Country Code, Cryptographic Checksum'. 'CCA' may refer to 'Clear Channel Assessment'. 'CCE' may refer to 'Control Channel Element'. 'CCCH' may refer to 'Common Control Channel'. 'CE' may refer to 'Coverage Enhancement'. 'CDM' may refer to 'Content Delivery Network'. 'CDMA' may refer to 'Code-Division Multiple Access'. 'CDR' may refer to 'Charging Data Request'. 'CDR' may refer to 'Charging Data Response'. 'CFRA' may refer to 'Contention Free Random Access'. 'CG' may refer to 'Cell Group'. 'CGF' may refer to 'Charging Gateway Function'. 'CHF' may refer to 'Charging Function'. 'CI' may refer to 'Cell Identity'. 'CID' may refer to 'Cell-ID (e.g., positioning method)'. 'CIM' may refer to 'Common Information Model'. 'CIR' may refer to 'Carrier to Interference Ratio'. 'CK' may refer to 'Cipher Key'. 'CM' may refer to 'Connection Management, Conditional Mandatory'. 'CMAS' may refer to 'Commercial Mobile Alert Service'. 'CMD' may refer to 'Command'. 'CMS' may refer to 'Cloud Management System'. 'CO' may refer to 'Conditional Optional'. 'CoMP' may refer to 'Coordinated Multi-Point'. 'CORESET' may refer to 'Control Resource Set'. 'COTS' may refer to 'Commercial Off-The-Shelf'. 'CP' may refer to 'Control Plane, Cyclic Prefix, Connection Point'. 'CPD' may refer to 'Connection Point Descriptor'. 'CPE' may refer to 'Customer Premise Equipment'. 'CPICH' may refer to 'Common Pilot Channel'. 'CQI' may refer to 'Channel Quality Indicator'. 'CPU' may refer to 'CSI processing unit, Central Processing Unit'. 'C/R' may refer to 'Command/Response field bit'. 'CRAN' may refer to 'Cloud Radio Access Network, Cloud RAN'. 'CRB' may refer to 'Common Resource Block'. 'CRC' may refer to 'Cyclic Redundancy Check'. 'CRI' may refer to 'Channel-State Information Resource Indicator, CSI-RS Resource Indicator'. 'C-RNTI' may refer to 'Cell RNTI'. 'CS' may refer to 'Circuit Switched'. 'CSCF ' may refer to 'call session control function'. 'CSAR' may refer to 'Cloud Service Archive'. 'CSI' may refer to 'Channel-State Information'. 'CSI-IM' may refer to 'CSI Interference Measurement'. 'CSI-RS' may refer to 'CSI Reference Signal'. 'CSI-RSRP' may refer to 'CSI reference signal received power'. 'CSI-RSRQ' may refer to 'CSI reference signal received quality'. 'CSI-SINR' may refer to 'CSI signal-to-noise and interference ratio'. 'CSMA' may refer to 'Carrier Sense Multiple Access'. 'CSMA/CA' may refer to 'CSMA with collision avoidance'. 'CSS' may refer to 'Common Search Space, Cell-specific Search Space'. 'CTF' may refer to 'Charging Trigger Function'. 'CTS' may refer to 'Clear-to-Send'. 'CW' may refer to 'Codeword'. 'CWS' may refer to 'Contention Window Size'.

'D2D' may refer to 'Device-to-Device'. 'DC' may refer to 'Dual Connectivity, Direct Current'. 'DCI' may refer to 'Downlink Control Information'. 'DF' may refer to 'Deployment Flavour'. 'DL' may refer to 'Downlink'. 'DMTF' may refer to 'Distributed Management Task Force'. 'DPDK' may refer to 'Data Plane Development Kit'. 'DM-RS, DMRS' may refer to 'Demodulation Reference Signal'. 'DN' may refer to 'Data network'. 'DNN ' may refer to 'Data Network Name'. 'DNAI' may refer to 'Data Network Access Identifier'. 'DRB' may refer to 'Data Radio Bearer'. 'DRS' may refer to 'Discovery Reference Signal'. 'DRX' may refer to 'Discontinuous Reception'. 'DSL' may refer to 'Domain Specific Language. Digital Subscriber Line'. 'DSLAM' may refer to 'DSL Access Multiplexer'. 'DwPTS' may refer to 'Downlink Pilot Time Slot'.

'E-LAN' may refer to 'Ethernet Local Area Network'. 'E2E' may refer to 'End-to-End'. 'EAS' may refer to 'Edge Application Server'. 'ECCA' may refer to 'extended clear channel assessment, extended CCA'. 'ECCE' may refer to 'Enhanced Control Channel Element, Enhanced CCE'. 'ED' may refer to 'Energy Detection'. 'EDGE' may refer to 'Enhanced Datarates for GSM Evolution (GSM Evolution)'. 'EAS ' may refer to 'Edge Application Server'. 'EASID ' may refer to 'Edge Application Server Identification'. 'ECS' may refer to 'Edge Configuration Server'. 'ECSP ' may refer to 'Edge Computing Service Provider'. 'EDN' may refer to 'Edge Data Network'. 'EEC' may refer to 'Edge Enabler Client'. 'EECID ' may refer to 'Edge Enabler Client Identification'. 'EES' may refer to 'Edge Enabler Server'. 'EESID' may refer to 'Edge Enabler Server Identification'. 'EHE ' may refer to 'Edge Hosting Environment'. 'EGMF' may refer to 'Exposure Governance Management Function'. 'EGPRS' may refer to 'Enhanced GPRS'. 'EIR' may refer to 'Equipment Identity Register'. 'eLAA' may refer to 'enhanced Licensed Assisted Access, enhanced LAA'. 'EM' may refer to 'Element Manager'. 'eMBB' may refer to 'Enhanced Mobile Broadband'. 'EMS' may refer to 'Element Management System'. 'eNB' may refer to 'evolved NodeB, E-UTRAN Node B'. 'EN-DC' may refer to 'E-UTRA-NR Dual Connectivity'. 'EPC' may refer to 'Evolved Packet Core'. 'EPDCCH' may refer to 'enhanced PDCCH, enhanced Physical Downlink Control Cannel'. 'EPRE' may refer to 'Energy per resource element'. 'EPS' may refer to 'Evolved Packet System'. 'EREG' may refer to 'enhanced REG, enhanced resource element groups'. 'ETSI' may refer to 'European Telecommunications Standards Institute'. 'ETWS' may refer to 'Earthquake and Tsunami Warning System'. 'eUICC' may refer to 'embedded UICC, embedded Universal Integrated Circuit Card'. 'E-UTRA' may refer to 'Evolved UTRA'. 'E-UTRAN' may refer to 'Evolved UTRAN'. 'EV2X' may refer to 'Enhanced V2X'.

'F1AP' may refer to 'F1 Application Protocol'. 'F1-C' may refer to 'F1 Control plane interface'. 'F1-U' may refer to 'F1 User plane interface'. 'FACCH' may refer to 'Fast Associated Control CHannel'. 'FACCH/F' may refer to 'Fast Associated Control Channel/Full rate'. 'FACCH/H' may refer to 'Fast Associated Control Channel/Half rate'. 'FACH' may refer to 'Forward Access Channel'. 'FAUSCH' may refer to 'Fast Uplink Signalling Channel'. 'FB' may refer to 'Functional Block'. 'FBI' may refer to 'Feedback Information'. 'FCC' may refer to 'Federal Communications Commission'. 'FCCH' may refer to 'Frequency Correction CHannel'. 'FDD' may refer to 'Frequency Division Duplex'. 'FDM' may refer to 'Frequency Division Multiplex'. 'FDMA' may refer to 'Frequency Division Multiple Access'. 'FE' may refer to 'Front End'. 'FEC' may refer to 'Forward Error Correction'. 'FFS' may refer to 'For Further Study'. 'FFT' may refer to 'Fast Fourier Transformation'. 'feLAA' may refer to 'further enhanced Licensed Assisted Access, further enhanced LAA'. 'FN' may refer to 'Frame Number'. 'FPGA' may refer to 'Field-Programmable Gate Array'. 'FR' may refer to 'Frequency Range'. 'FQDN ' may refer to 'Fully Qualified Domain Name'. 'G-RNTI' may refer to 'GERAN Radio Network Temporary Identity'. 'GERAN' may refer to 'GSM EDGE RAN, GSM EDGE Radio Access Network'. 'GGSN' may refer to 'Gateway GPRS Support Node'. 'GLONASS' may refer to 'GLObal'naya NAvigatsionnaya Sputnikovaya Sistema (Engl.: Global Navigation Satellite System)'. 'gNB' may refer to 'Next Generation NodeB'. 'gNB-CU' may refer to 'gNB-centralized unit, Next Generation NodeB centralized unit'. 'gNB-DU' may refer to 'gNB-distributed unit, Next Generation NodeB distributed unit'. 'GNSS' may refer to 'Global Navigation Satellite System'. 'GPRS' may refer to 'General Packet Radio Service'. 'GPSI Generic Public Subscription' may refer to 'Identifier'. 'GSM' may refer to 'Global System for Mobile Communications, Groupe Spécial Mobile'. 'GTP' may refer to 'GPRS Tunneling Protocol'. 'GTP-U' may refer to 'GPRS Tunnelling Protocol for User Plane'. 'GTS' may refer to 'Go To Sleep Signal (related to WUS)'. 'GUMMEI' may refer to 'Globally Unique MME Identifier'. 'GUTI' may refer to 'Globally Unique Temporary UE Identity'.

'HARQ' may refer to 'Hybrid ARQ, Hybrid Automatic Repeat Request'. 'HANDO' may refer to 'Handover'. 'HFN' may refer to 'HyperFrame Number'. 'HHO' may refer to 'Hard Handover'. 'HLR' may refer to 'Home Location Register'. 'HN' may refer to 'Home Network'. 'HO' may refer to 'Handover'. 'HPLMN' may refer to 'Home Public Land Mobile Network'. 'HSDPA' may refer to 'High Speed Downlink Packet Access'. 'HSN' may refer to 'Hopping Sequence Number'. 'HSPA' may refer to 'High Speed Packet Access'. 'HSS' may refer to 'Home Subscriber Server'. 'HSUPA' may refer to 'High Speed Uplink Packet Access'. 'HTTP' may refer to 'Hyper Text Transfer Protocol'. 'HTTPS' may refer to 'Hyper Text Transfer Protocol Secure (https is http/1.1 over SSL, i.e. port 443)'.

'I-Block' may refer to 'Information Block'. 'ICCID' may refer to 'Integrated Circuit Card Identification'. 'IAB' may refer to 'Integrated Access and Backhaul'. 'ICIC' may refer to 'Inter-Cell Interference Coordination'. 'ID' may refer to 'Identity, identifier'. 'IDFT' may refer to 'Inverse Discrete Fourier Transform'. 'IE' may refer to 'Information element'. 'IBE' may refer to 'In-Band Emission'. 'IEEE' may refer to 'Institute of Electrical and Electronics Engineers'. 'IEI' may refer to 'Information Element Identifier'. 'IEIDL' may refer to 'Information Element Identifier Data Length'. 'IETF' may refer to 'Internet Engineering Task Force'. 'IF' may refer to 'Infrastructure'. 'IIOT ' may refer to 'Industrial Internet of Things'. 'IM' may refer to 'Interference Measurement, Intermodulation, IP Multimedia'. 'IMC' may refer to 'IMS Credentials'. 'IMEI' may refer to 'International Mobile Equipment Identity'. 'IMGI' may refer to 'International mobile group identity'. 'IMPI' may refer to 'IP Multimedia Private Identity'. 'IMPU' may refer to 'IP Multimedia PUblic identity'. 'IMS' may refer to 'IP Multimedia Subsystem'. 'IMSI' may refer to 'International Mobile Subscriber Identity'. 'IoT' may refer to 'Internet of Things'. 'IP' may refer to 'Internet Protocol'. 'Ipsec' may refer to 'IP Security, Internet Protocol Security'. 'IP-CAN' may refer to 'IP-Connectivity Access Network'. 'IP-M' may refer to 'IP Multicast'. 'IPv4' may refer to 'Internet Protocol Version 4'. 'IPv6' may refer to 'Internet Protocol Version 6'. 'IR' may refer to 'Infrared'. 'IS' may refer to 'In Sync'. 'IRP' may refer to 'Integration Reference Point'. 'ISDN' may refer to 'Integrated Services Digital Network'. 'ISIM' may refer to 'IM Services Identity Module'. 'ISO' may refer to 'International Organisation for Standardisation'. 'ISP' may refer to 'Internet Service Provider'. 'IWF' may refer to 'Interworking-Function'. 'I-WLAN' may refer to 'Interworking WLAN' and may further refer to 'Constraint length of the convolutional code, USIM Individual key'.

'kB' may refer to 'Kilobyte (1000 bytes)'. 'kbps' may refer to 'kilo-bits per second'. 'Kc' may refer to 'Ciphering key'. 'Ki' may refer to 'Individual subscriber authentication key'. 'KPI' may refer to 'Key Performance Indicator'. 'KQI' may refer to 'Key Quality Indicator'. 'KSI' may refer to 'Key Set Identifier'. 'ksps' may refer to 'kilo-symbols per second'. 'KVM' may refer to 'Kernel Virtual Machine'. 'L1' may refer to 'Layer 1 (physical layer)'. 'L1-RSRP' may refer to 'Layer 1 reference signal received power'. 'L2' may refer to 'Layer 2 (data link layer)'. 'L3' may refer to 'Layer 3 (network layer)'. 'LAA' may refer to 'Licensed Assisted Access'. 'LAN' may refer to 'Local Area Network'. 'LADN' may refer to 'Local Area Data Network'. 'LBT' may refer to 'Listen Before Talk'. 'LCM' may refer to 'LifeCycle Management'.'LCR' may refer to 'Low Chip Rate'. 'LCS' may refer to 'Location Services'. 'LCID ' may refer to 'Logical Channel ID'. 'LI' may refer to 'Layer Indicator'. 'LLC' may refer to 'Logical Link Control, Low Layer Compatibility'. 'LMF' may refer to 'Location Management Function'. 'LOS ' may refer to 'Line of Sight'. 'LPLMN' may refer to 'Local PLMN'. 'LPP' may refer to 'LTE Positioning Protocol'. 'LSB' may refer to 'Least Significant Bit'. 'LTE' may refer to 'Long Term Evolution'. 'LWA' may refer to 'LTE-WLAN aggregation'. 'LWIP' may refer to 'LTE/WLAN Radio Level Integration with IPsec Tunnel'. 'LTE' may refer to 'Long Term Evolution'.

'M2M' may refer to 'Machine-to-Machine'. 'MAC' may refer to 'Medium Access Control (protocol layering context)'. 'MAC' may refer to 'Message authentication code (security/encryption context)'. 'MAC-A' may refer to 'MAC used for authentication and key agreement (TSG T WG3 context)'. 'MAC-I' may refer to 'MAC used for data integrity of signalling messages (TSG T WG3 context)'. 'MANO' may refer to 'Management and Orchestration'. 'MBMS' may refer to 'Multimedia Broadcast and Multicast Service'. 'MBSFN' may refer to 'Multimedia Broadcast multicast service Single Frequency Network'. 'MCC' may refer to 'Mobile Country Code'. 'MCG' may refer to 'Master Cell Group'. 'MCOT' may refer to 'Maximum Channel Occupancy Time'. 'MCS' may refer to 'Modulation and coding scheme'. 'MDAF' may refer to 'Management Data Analytics Function'. 'MDAS' may refer to 'Management Data Analytics Service'. 'MDT' may refer to 'Minimization of Drive Tests'. 'ME' may refer to 'Mobile Equipment'. 'MeNB' may refer to 'master eNB'. 'MER' may refer to 'Message Error Ratio'. 'MGL' may refer to 'Measurement Gap Length'. 'MGRP' may refer to 'Measurement Gap Repetition Period'. 'MIB' may refer to 'Master Information Block, Management Information Base'. 'MIMO' may refer to 'Multiple Input Multiple Output'. 'MLC' may refer to 'Mobile Location Centre'. 'MM' may refer to 'Mobility Management'. 'MME' may refer to 'Mobility Management Entity'. 'MN' may refer to 'Master Node'. 'MNO' may refer to 'Mobile Network Operator'. 'MO' may refer to 'Measurement Object, Mobile Originated'. 'MPBCH' may refer to 'MTC Physical Broadcast CHannel'. 'MPDCCH' may refer to 'MTC Physical Downlink Control CHannel'. 'MPDSCH' may refer to 'MTC Physical Downlink Shared CHannel'. 'MPRACH' may refer to 'MTC Physical Random Access CHannel'. 'MPUSCH' may refer to 'MTC Physical Uplink Shared Channel'. 'MPLS' may refer to 'MultiProtocol Label Switching'. 'MS' may refer to 'Mobile Station'. 'MSB' may refer to 'Most Significant Bit'. 'MSC' may refer to 'Mobile Switching Centre'. 'MSI' may refer to 'Minimum System Information, MCH Scheduling Information'. 'MSID' may refer to 'Mobile Station Identifier'. 'MSIN' may refer to 'Mobile Station Identification Number'. 'MSISDN' may refer to 'Mobile Subscriber ISDN Number'. 'MT' may refer to 'Mobile Terminated, Mobile Termination'. 'MTC' may refer to 'Machine-Type Communications'. 'MTLF' may refer to 'Model Training Logical Functions'. 'mMTC' may refer to 'massive MTC, massive Machine-Type Communications'. 'MU-MIMO' may refer to 'Multi User MIMO'. 'MWUS' may refer to 'MTC wake-up signal, MTC WUS'.

'NACK' may refer to 'Negative Acknowledgement'. 'NAI' may refer to 'Network Access Identifier'. 'NAS' may refer to 'Non-Access Stratum, Non-Access Stratum layer'. 'NCT' may refer to 'Network Connectivity Topology'. 'NC-JT ' may refer to 'Non-Coherent Joint Transmission'. 'NEC' may refer to 'Network Capability Exposure'. 'NE-DC' may refer to 'NR-E-UTRA Dual Connectivity'. 'NEF' may refer to 'Network Exposure Function'. 'NF' may refer to 'Network Function'. 'NFP' may refer to 'Network Forwarding Path'. 'NFPD' may refer to 'Network Forwarding Path Descriptor'. 'NFV' may refer to 'Network Functions Virtualization'. 'NFVI' may refer to 'NFV Infrastructure'. 'NFVO' may refer to 'NFV Orchestrator'. 'NG' may refer to 'Next Generation, Next Gen'. 'NGEN-DC' may refer to 'NG-RAN E-UTRA-NR Dual Connectivity'. 'NM' may refer to 'Network Manager'. 'NMS' may refer to 'Network Management System'. 'N-PoP' may refer to 'Network Point of Presence'. 'NMIB, N-MIB' may refer to 'Narrowband MIB'. 'NPBCH' may refer to 'Narrowband Physical Broadcast CHannel'. 'NPDCCH' may refer to 'Narrowband Physical Downlink Control CHannel'. 'NPDSCH' may refer to 'Narrowband Physical Downlink Shared CHannel'. 'NPRACH' may refer to 'Narrowband Physical Random Access CHannel'. 'NPUSCH' may refer to 'Narrowband Physical Uplink Shared CHannel'. 'NPSS' may refer to 'Narrowband Primary Synchronization Signal'. 'NSSS' may refer to 'Narrowband Secondary Synchronization Signal'. 'NR' may refer to 'New Radio, Neighbour Relation'. 'NRF' may refer to 'NF Repository Function'. 'NRS' may refer to 'Narrowband Reference Signal'. 'NS' may refer to 'Network Service'. 'NSA' may refer to 'Non-Standalone operation mode'. 'NSD' may refer to 'Network Service Descriptor'. 'NSR' may refer to 'Network Service Record'. 'NSSAI' may refer to 'Network Slice Selection Assistance Information'. 'S-NNSAI' may refer to 'Single-NSSAI'. 'NSSF' may refer to 'Network Slice Selection Function'. 'NW' may refer to 'Network'. 'NWDAF' may refer to 'Network Data Analytics Function'. 'NWUS' may refer to 'Narrowband wake-up signal, Narrowband WUS'. 'NZP' may refer to 'Non-Zero Power'.

'O&M' may refer to 'Operation and Maintenance'. 'ODU2' may refer to 'Optical channel Data Unit - type 2'. 'OFDM' may refer to 'Orthogonal Frequency Division Multiplexing'. 'OFDMA' may refer to 'Orthogonal Frequency Division Multiple Access'. 'OOB' may refer to 'Out-of-band'. 'OOS' may refer to 'Out of Sync'. 'OPEX' may refer to 'OPerating EXpense'. 'OSI' may refer to 'Other System Information'. 'OSS' may refer to 'Operations Support System'. 'OTA' may refer to 'over-the-air'. 'PAPR' may refer to 'Peak-to-Average Power Ratio'. 'PAR' may refer to 'Peak to Average Ratio'. 'PBCH' may refer to 'Physical Broadcast Channel'. 'PC' may refer to 'Power Control, Personal Computer'. 'PCC' may refer to 'Primary Component Carrier, Primary CC'. 'P-CSCF ' may refer to 'Proxy CSCF'. 'PCell' may refer to 'Primary Cell'. 'PCI' may refer to 'Physical Cell ID, Physical Cell Identity'. 'PCEF' may refer to 'Policy and Charging Enforcement Function'. 'PCF' may refer to 'Policy Control Function'. 'PCRF' may refer to 'Policy Control and Charging Rules Function'. 'PDCP' may refer to 'Packet Data Convergence Protocol, Packet Data Convergence Protocol layer'. 'PDCCH' may refer to 'Physical Downlink Control Channel'. 'PDCP' may refer to 'Packet Data Convergence Protocol'. 'PDN' may refer to 'Packet Data Network, Public Data Network'. 'PDSCH' may refer to 'Physical Downlink Shared Channel'. 'PDU' may refer to 'Protocol Data Unit'. 'PEI' may refer to 'Permanent Equipment Identifiers'. 'PFD' may refer to 'Packet Flow Description'. 'P-GW' may refer to 'PDN Gateway'. 'PHICH' may refer to 'Physical hybrid-ARQ indicator channel'. 'PHY' may refer to 'Physical layer'. 'PLMN' may refer to 'Public Land Mobile Network'. 'PIN' may refer to 'Personal Identification Number'. 'PM' may refer to 'Performance Measurement'. 'PMI' may refer to 'Precoding Matrix Indicator'. 'PNF' may refer to 'Physical Network Function'. 'PNFD' may refer to 'Physical Network Function Descriptor'. 'PNFR' may refer to 'Physical Network Function Record'. 'POC' may refer to 'PTT over Cellular'. 'PP, PTP' may refer to 'Point-to-Point'. 'PPP' may refer to 'Point-to-Point Protocol'. 'PRACH' may refer to 'Physical RACH'. 'PRB' may refer to 'Physical resource block'. 'PRG' may refer to 'Physical resource block group'. 'ProSe' may refer to 'Proximity Services, Proximity-Based Service'. 'PRS' may refer to 'Positioning Reference Signal'. 'PRR' may refer to 'Packet Reception Radio'. 'PS' may refer to 'Packet Services'. 'PSBCH' may refer to 'Physical Sidelink Broadcast Channel'. 'PSDCH' may refer to 'Physical Sidelink Downlink Channel'. 'PSCCH' may refer to 'Physical Sidelink Control Channel'. 'PSSCH' may refer to 'Physical Sidelink Shared Channel'. 'PSFCH' may refer to 'physical sidelink feedback channel'. 'PSCell' may refer to 'Primary SCell'. 'PSS' may refer to 'Primary Synchronization Signal'. 'PSTN' may refer to 'Public Switched Telephone Network'. 'PT-RS' may refer to 'Phase-tracking reference signal'. 'PTT' may refer to 'Push-to-Talk'. 'PUCCH' may refer to 'Physical Uplink Control Channel'. 'PUSCH' may refer to 'Physical Uplink Shared Channel'.

'QAM' may refer to 'Quadrature Amplitude Modulation'. 'QCI' may refer to 'QoS class of identifier'. 'QCL' may refer to 'Quasi co-location'. 'QFI' may refer to 'QoS Flow ID, QoS Flow Identifier'. 'QoS' may refer to 'Quality of Service'. 'QPSK' may refer to 'Quadrature (Quaternary) Phase Shift Keying'. 'QZSS' may refer to 'Quasi-Zenith Satellite System'. 'RA-RNTI' may refer to 'Random Access RNTI'. 'RAB' may refer to 'Radio Access Bearer, Random Access Burst'. 'RACH' may refer to 'Random Access Channel'. 'RADIUS' may refer to 'Remote Authentication Dial In User Service'. 'RAN' may refer to 'Radio Access Network'. 'RAND' may refer to 'RANDom number (used for authentication)'. 'RAR' may refer to 'Random Access Response'. 'RAT' may refer to 'Radio Access Technology'. 'RAU' may refer to 'Routing Area Update'. 'RB' may refer to 'Resource block, Radio Bearer'. 'RBG' may refer to 'Resource block group'. 'REG' may refer to 'Resource Element Group'. 'Rel' may refer to 'Release'. 'REQ' may refer to 'REQuest'. 'RF' may refer to 'Radio Frequency'. 'RI' may refer to 'Rank Indicator'. 'RIV' may refer to 'Resource indicator value'. 'RL' may refer to 'Radio Link'. 'RLC' may refer to 'Radio Link Control, Radio Link Control layer'. 'RLC AM' may refer to 'RLC Acknowledged Mode'. 'RLC UM' may refer to 'RLC Unacknowledged Mode'. 'RLF' may refer to 'Radio Link Failure'. 'RLM' may refer to 'Radio Link Monitoring'. 'RLM-RS' may refer to 'Reference Signal for RLM'. 'RM' may refer to 'Registration Management'.'RMC' may refer to 'Reference Measurement Channel'. 'RMSI' may refer to 'Remaining MSI, Remaining Minimum System Information'. 'RN' may refer to 'Relay Node'. 'RNC' may refer to 'Radio Network Controller'. 'RNL' may refer to 'Radio Network Layer'. 'RNTI' may refer to 'Radio Network Temporary Identifier'. 'ROHC' may refer to 'RObust Header Compression'. 'RRC' may refer to 'Radio Resource Control, Radio Resource Control layer'. 'RRM' may refer to 'Radio Resource Management'. 'RS' may refer to 'Reference Signal'. 'RSRP' may refer to 'Reference Signal Received Power'. 'RSRQ' may refer to 'Reference Signal Received Quality'. 'RSSI' may refer to 'Received Signal Strength Indicator'. 'RSU' may refer to 'Road Side Unit'. 'RSTD' may refer to 'Reference Signal Time difference'. 'RTP' may refer to 'Real Time Protocol'. 'RTS' may refer to 'Ready-To-Send'. 'RTT' may refer to 'Round Trip Time'. 'Rx' may refer to 'Reception, Receiving, Receiver'.

'S1AP' may refer to 'S1 Application Protocol'. 'S1-MME' may refer to 'S1 for the control plane'. 'S1-U' may refer to 'S1 for the user plane'. 'S-CSCF ' may refer to 'serving CSCF'. 'S-GW' may refer to 'Serving Gateway'. 'S-RNTI' may refer to 'SRNC Radio Network Temporary Identity'. 'S-TMSI' may refer to 'SAE Temporary Mobile Station Identifier'. 'SA' may refer to 'Standalone operation mode'. 'SAE' may refer to 'System Architecture Evolution'. 'SAP' may refer to 'Service Access Point'. 'SAPD' may refer to 'Service Access Point Descriptor'. 'SAPI' may refer to 'Service Access Point Identifier'. 'SCC' may refer to 'Secondary Component Carrier, Secondary CC'. 'SCell' may refer to 'Secondary Cell'. 'SCEF ' may refer to 'Service Capability Exposure Function'. 'SC-FDMA' may refer to 'Single Carrier Frequency Division Multiple Access'. 'SCG' may refer to 'Secondary Cell Group'. 'SCM' may refer to 'Security Context Management'. 'SCS' may refer to 'Subcarrier Spacing'. 'SCTP' may refer to 'Stream Control Transmission Protocol'. 'SDAP' may refer to 'Service Data Adaptation Protocol, Service Data Adaptation Protocol layer'. 'SDL' may refer to 'Supplementary Downlink'. 'SDNF' may refer to 'Structured Data Storage Network Function'. 'SDP' may refer to 'Session Description Protocol'. 'SDSF' may refer to 'Structured Data Storage Function'. 'SDT ' may refer to 'Small Data Transmission'. 'SDU' may refer to 'Service Data Unit'. 'SEAF' may refer to 'Security Anchor Function'. 'SeNB' may refer to 'secondary eNB'. 'SEPP' may refer to 'Security Edge Protection Proxy'. 'SFI' may refer to 'Slot format indication'. 'SFTD' may refer to 'Space-Frequency Time Diversity, SFN and frame timing difference'. 'SFN' may refer to 'System Frame Number'. 'SgNB' may refer to 'Secondary gNB'. 'SGSN' may refer to 'Serving GPRS Support Node'. 'S-GW' may refer to 'Serving Gateway'. 'SI' may refer to 'System Information'. 'SI-RNTI' may refer to 'System Information RNTI'. 'SIB' may refer to 'System Information Block'. 'SIM' may refer to 'Subscriber Identity Module'. 'SIP' may refer to 'Session Initiated Protocol'. 'SiP' may refer to 'System in Package'. 'SL' may refer to 'Sidelink'. 'SLA' may refer to 'Service Level Agreement'. 'SM' may refer to 'Session Management'. 'SMF' may refer to 'Session Management Function'. 'SMS' may refer to 'Short Message Service'. 'SMSF' may refer to 'SMS Function'. 'SMTC' may refer to 'SSB-based Measurement Timing Configuration'. 'SN' may refer to 'Secondary Node, Sequence Number'. 'SoC' may refer to 'System on Chip'. 'SON' may refer to 'Self-Organizing Network'. 'SpCell' may refer to 'Special Cell'. 'SP-CSI-RNTI' may refer to 'Semi-Persistent CSI RNTI'. 'SPS' may refer to 'Semi-Persistent Scheduling'. 'SQN' may refer to 'Sequence number'. 'SR' may refer to 'Scheduling Request'. 'SRB' may refer to 'Signalling Radio Bearer'. 'SRS' may refer to 'Sounding Reference Signal'. 'SS' may refer to 'Synchronization Signal'. 'SSB' may refer to 'Synchronization Signal Block'.'SSID' may refer to 'Service Set Identifier'.'SS/PBCH' may refer to 'Block'. 'SSBRI' may refer to 'SS/PBCH Block Resource Indicator, Synchronization Signal Block Resource Indicator'. 'SSC' may refer to 'Session and Service Continuity'. "SS-RSRP' may refer to 'Synchronization Signal based Reference Signal Received Power'. 'SS-RSRQ' may refer to 'Synchronization Signal based Reference Signal Received Quality'. 'SS-SINR' may refer to 'Synchronization Signal based Signal to Noise and Interference Ratio'. 'SSS' may refer to 'Secondary Synchronization Signal'. 'SSSG' may refer to 'Search Space Set Group'. 'SSSIF' may refer to 'Search Space Set Indicator'. 'SST' may refer to 'Slice/Service Types'. 'SU-MIMO' may refer to 'Single User MIMO'. 'SUL' may refer to 'Supplementary Uplink'.

'TA' may refer to 'Timing Advance, Tracking Area'. 'TAC' may refer to 'Tracking Area Code'. 'TAG' may refer to 'Timing Advance Group'. 'TAI' may refer to 'Tracking Area Identity'. 'TAU' may refer to 'Tracking Area Update'. 'TB' may refer to 'Transport Block'. 'TBS' may refer to 'Transport Block Size'. 'TBD' may refer to 'To Be Defined'. 'TCI' may refer to 'Transmission Configuration Indicator'. 'TCP' may refer to 'Transmission Communication Protocol'. 'TDD' may refer to 'Time Division Duplex'. 'TDM' may refer to 'Time Division Multiplexing'. 'TDMA' may refer to 'Time Division Multiple Access'. 'TE' may refer to 'Terminal Equipment'. 'TEID' may refer to 'Tunnel End Point Identifier'. 'TFT' may refer to 'Traffic Flow Template'. 'TMSI' may refer to 'Temporary Mobile Subscriber Identity'. 'TNL' may refer to 'Transport Network Layer'. 'TPC' may refer to 'Transmit Power Control'. 'TPMI' may refer to 'Transmitted Precoding Matrix Indicator'. 'TR' may refer to 'Technical Report'. 'TRP, TRxP' may refer to 'Transmission Reception Point'. 'TRS' may refer to 'Tracking Reference Signal'. 'TRx' may refer to 'Transceiver'. 'TS' may refer to 'Technical Specifications, Technical Standard'. 'TTI' may refer to 'Transmission Time Interval'. 'Tx' may refer to 'Transmission, Transmitting, Transmitter'.

'U-RNTI' may refer to 'UTRAN Radio Network Temporary Identity'. 'UART' may refer to 'Universal Asynchronous Receiver and Transmitter'. 'UCI' may refer to 'Uplink Control Information'. 'UE' may refer to 'User Equipment'. 'UDM' may refer to 'Unified Data Management'. 'UDP' may refer to 'User Datagram Protocol'. 'UDSF' may refer to 'Unstructured Data Storage Network Function'. 'UICC' may refer to 'Universal Integrated Circuit Card'. 'UL' may refer to 'Uplink'. 'UM' may refer to 'Unacknowledged Mode'. 'UML' may refer to 'Unified Modelling Language'. 'UMTS' may refer to 'Universal Mobile Telecommunications System'. 'UP' may refer to 'User Plane'. 'UPF' may refer to 'User Plane Function'. 'URI' may refer to 'Uniform Resource Identifier'. 'URL' may refer to 'Uniform Resource Locator'. 'URLLC' may refer to 'Ultra-Reliable and Low Latency'. 'USB' may refer to 'Universal Serial Bus'. 'USIM' may refer to 'Universal Subscriber Identity Module'. 'USS' may refer to 'UE-specific search space'. 'UTRA' may refer to 'UMTS Terrestrial Radio Access'. 'UTRAN' may refer to 'Universal Terrestrial Radio Access Network'. 'UwPTS' may refer to 'Uplink Pilot Time Slot'. 'V2I' may refer to 'Vehicle-to-Infrastruction'. 'V2P' may refer to 'Vehicle-to-Pedestrian'. 'V2V' may refer to 'Vehicle-to-Vehicle'. 'V2X' may refer to 'Vehicle-to-everything'. 'VIM' may refer to 'Virtualized Infrastructure Manager'. 'VL' may refer to 'Virtual Link,'. 'VLAN' may refer to 'Virtual LAN, Virtual Local Area Network'. 'VM' may refer to 'Virtual Machine'. 'VNF' may refer to 'Virtualized Network Function'. 'VNFFG' may refer to 'VNF Forwarding Graph'. 'VNFFGD' may refer to 'VNF Forwarding Graph Descriptor'. 'VNFM' may refer to 'VNF Manager'. 'VoIP' may refer to 'Voice-over-IP, Voice-over-Internet Protocol'. 'VPLMN' may refer to 'Visited Public Land Mobile Network'. 'VPN' may refer to 'Virtual Private Network'. 'VRB' may refer to 'Virtual Resource Block'. 'WiMAX' may refer to 'Worldwide Interoperability for Microwave Access'. 'WLAN' may refer to 'Wireless Local Area Network'. 'WMAN' may refer to 'Wireless Metropolitan Area Network'. 'WPAN' may refer to 'Wireless Personal Area Network'. 'X2-C' may refer to 'X2-Control plane'. 'X2-U' may refer to 'X2-User plane'. 'XML' may refer to 'eXtensible Markup Language'. 'XRES' may refer to 'EXpected user RESponse'. 'XOR' may refer to 'eXclusive OR'. 'ZC' may refer to 'Zadoff-Chu'. 'ZP' may refer to 'Zero Power'.

### Terminology

For the purposes of the present document, the following terms and definitions are applicable to the examples and embodiments discussed herein.
The term "application" may refer to a complete and deployable package, environment to achieve a certain function in an operational environment. The term "AI/ML application" or the like may be an application that contains some AI/ML models and application-level descriptions.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "ML-assisted solution" is a solution that addresses a specific use case using ML algorithms during operation. ML models include supervised learning (e.g., linear regression, k-nearest neighbor (KNN), decision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

## Claims

1. A non-transitory computer-readable medium comprising instructions which, when executed by a processor of a network repository function, NRF, cause the processor to:
receive a discovery request from a vertical federated learning, VFL, server to identify eligible VFL clients based on registered network function, NF, profiles;
match the discovery request against the registered NF profiles;
respond with eligible VFL client identifiers; and
issue a secure token to the VFL server after verifying interoperability indicators and analytics capabilities of the VFL clients based on the registered NF profiles.

2. The non-transitory computer-readable medium of claim 1, wherein the VFL server comprises either a network data analytics function, NWDAF, or an application function, AF.

3. The non-transitory computer-readable medium of claim 2, wherein the instructions further cause the processor to receive the discovery request after the discovery request has been forwarded by a network exposure function, NEF, and wherein the discovery request originates from the AF acting as the VFL server.

4. The non-transitory computer-readable medium of claim 3, wherein the instructions further cause the processor to issue the secure token in a scenario of 3rd party AF-initiated federated learning, where the NEF facilitates discovery and token issuance through the NRF.

5. The non-transitory computer-readable medium of any one of claims 2 to 4, wherein the instructions further cause the processor to receive the discovery request directly from the NWDAF acting as the VFL server.

6. The non-transitory computer-readable medium of any one of claims 2 to 5, wherein the instructions further cause the processor to issue the secure token in response to a request for authorization of the AF acting as the VFL server, wherein the AF is an external AF.

7. The non-transitory computer-readable medium of any one of claims 2 to 6, wherein the instructions further cause the processor to issue the secure token in response to a request for authorization of the AF located outside the public land mobile network, PLMN, where the NWDAF requests the token for VFL activities.

8. The non-transitory computer-readable medium of any one of claims 1 to 7, wherein the instructions further cause the processor to issue the secure token that is encrypted and integrity-protected using digital signatures.

9. The non-transitory computer-readable medium of any one of claims 1 to 8, wherein the instructions further cause the processor to issue the secure token that includes data elements such as VFL participant identifiers, analytics IDs, and interoperability indicators.

10. The non-transitory computer-readable medium of any one of claims 1 to 9, wherein the instructions further cause the processor to store and manage NF profiles that include VFL capabilities and specific identifiers of the VFL participants.

11. A system for authorizing participants in a vertical federated learning, VFL, environment within a 3GPP network, the system comprising:
a network repository function, NRF, configured to store and manage network function, NF, profiles of VFL participants and to issue secure tokens based on verified interoperability indicators and analytics capabilities;
a network exposure function, NEF, configured to process registration and discovery requests from VFL servers and clients and to facilitate VFL operations by forwarding secure tokens and VFL operations to identified VFL clients; and
a VFL server configured to initiate VFL operations and send discovery and token requests to the NRF or NEF.

12. The system of claim 11, wherein the secure token issued by the NRF includes data elements such as VFL participant identifiers, analytics IDs, and interoperability indicators.

13. The system of claim 11 or 12, wherein the NEF is configured to anonymize and manage temporary identifiers for VFL clients during the discovery and operation phases to prevent unauthorized exposure of network topology and participant identities.

14. The system of any one of claims 11 to 13, wherein the VFL server comprises an application function, AF, and the NEF is configured to request the secure token from the NRF on behalf of the AF.

15. The system of any one of claims 11 to 13, wherein the VFL server comprises a network data analytics function, NWDAF, and the NWDAF is configured to directly request the secure token from the NRF.
